# EUROPÄISCHE PATENTSCHRIFT

(11) **EP 1 487 683 B1**
(45) Veröffentlichungstag und Bekanntmachung des Hinweises auf die Patenterteilung: **11.04.2007**
(21) Anmeldenummer: 03744368.6
(22) Anmeldetag: 15.03.2003
(51) Int. Cl.: B60T 11/20

(54) **KOLBENEINHEIT MIT GEFESSELTER FEDER**
PISTON UNIT HAVING A CAPTIVE SPRING
UNITE PISTON COMPORTANT UN RESSORT BLOQUE

(30) Priorität: 20.03.2002 DE 10212539
(43) Veröffentlichungstag der Anmeldung: 22.12.2004
(73) Patentinhaber: Continental Teves AG & Co. oHG, 60488 Frankfurt am Main (DE)
(72) Erfinder: KÖNIG, Harald, 61239 Ober-Mörlen (DE); BISCHOFF, Andreas, 61118 Bad Vilbel (DE)
(86) Internationale Anmeldenummer: PCT/EP2003/002723
(87) Internationale Veröffentlichungsnummer: WO 2003/078223

(56) Entgegenhaltungen:
- DE-A- 2 849 045
- DE-A- 19 520 679
- GB-A- 2 017 240
- GB-A- 2 051 988
- US-A- 3 522 706

## Beschreibung

Die Erfindung betrifft eine Kolbeneinheit mit einer gefesselten Feder für einen Zylinder, insbesondere für einen Tandem-Hauptzylinder eines Kraftfahrzeuges, gemäß dem Oberbegriff des Anspruchs 1.

Eine Kolbeneinheit ist beispielsweise in der DE 33 12 192 A1 gezeigt, in der ein Hauptzylinder für ein Bremssystem eines Kraftfahrzeugs beschrieben wird. Bei dem dort erläuterten Hauptzylinder handelt es sich um einen Zylinder mit zwei hintereinander angeordneten Kolben, durch welche zwei getrennte Bremskreise mit Bremsdruck angesteuert werden.

Bei einem mit zwei Kolben versehenen Hauptzylinder (Tandem-Hauptzylinder) ist es notwendig, dass die beiden Kolben möglichst gleichzeitig zwei durch die Kolben abgegrenzte Druckräume verschließen, damit der Druck in den beiden Bremskreisen gleichzeitig aufgebaut wird. Daher ist es notwendig, dass die beiden Kolben in einer Ausgangsstellung einen definierten Abstand zueinander haben. Der Abstand wird durch eine gefesselte Feder des eingangsseitig betätigten Kolbens (Primärkolben) festgelegt. Die Feder des Primärkolbens ist relativ steif gegenüber einer den zweiten Kolben (Sekundärkolben) rückholenden Feder, so dass die zweite Feder bei Beginn der Bewegung der beiden Kolben nachgibt und so die beiden Kolben im vorgegebenen Abstand die zu einem Behälter hinführenden Öffnungen gleichzeitig verschließen. Um die durch die Lage der Fesselung festgelegte Länge der ersten Feder am Primärkolben einstellen zu können, ist bei der oben genannten Patentanmeldung eine Schraube vorgesehen, deren Schraubenkopf einen Anschlag für eine gegenüber der Schraube bewegliche Hülse bildet, wobei die Hülse mit einem freien Ende ein freies Ende der steifen Feder abstützt. Ein anderes Ende der Feder liegt an dem Primärkolben an. Durch das Verstellen der Schraube besteht bei der bekannten Kolbeneinheit die Möglichkeit, die Länge der Feder einzustellen. Nachteilig bei der bekannten Kolbeneinheit gemäß DE 33 12 192 A1 ist es allerdings, dass sowohl die Schraube als auch der Kolben mit einem Gewinde versehen werden müssen und dass die Schraube sich gegenüber dem Kolben verdrehen kann.

Aus der GB 2 017 240 A ist eine Kolbeneinheit für einen Hauptzylinder mit einer gefesselten Feder bekannt, deren Kolben einen von seinem Ende hervorstehenden Vorsprung aufweist. Als nachteilig wird der Bauraum der Kolbeneinheit sowie die fehlende Führung der Feder angesehen.

Aufgabe der Erfindung ist es, den Bauraum der Kolbeneinheit zu reduzieren und eine Führung der Feder zu ermöglichen.

Die Aufgabe wird durch die Merkmale des kennzeichnenden Teils des Anspruch 1 gelöst.

Erfindungsgemäß kann der Vorsprung an dem Kolben durch Umformtechnik vorgesehen sowie an den Kolben angeschweißt, geklebt, durch Reibschluss verkeilt oder vernietet werden. Im Rahmen der Erfindung liegen somit auch alle Verbindungstechniken, die in einfacher Weise den Vorsprung mit dem Kolben unlösbar verbinden.

Die vorliegende Erfindung kann auch bei einem Hauptzylinder eingesetzt werden, der nur einen einzigen Kolben besitzt. Ebenso ist es nicht zwingend notwendig, dass der Zylinder für ein Bremssystem verwendet wird.

Eine für die Herstellung des Vorsprungs besonders vorteilhafte Lösung ergibt sich dadurch, dass der Vorsprung einstückig vorzugsweise durch Fliesspressen an den Kolben angeformt ist. Der erfindungsgemäße Vorsprung wird also aus dem Werkstoff des Kolbens herausgeformt, womit ein zusätzlicher Arbeitsgang zum Verbinden des Vorsprunges mit dem Kolben entfällt. Hierzu wird ein geeignetes Werkstück in eine entsprechend gestaltete Form eingelegt und mittels eines Stempels der Kolben einschließlich des Vorsprunges herausgeformt. Dabei fließt der Werkstoff zur Bildung des Vorsprungs in eine entsprechende Öffnung des Stempels.
Der Vorsprung kann aber auch durch Abdrehen des Kolbenwerkstoffes gebildet werden.

Wie eingangs schon erläutert, ist es notwendig einen Anschlag vorzusehen, welcher die maximale Ausdehnung der Feder in ihrer Längsrichtung festlegt. Dabei muss die Lage des Anschlages sehr genau festgelegt werden, damit der Tandem-Hauptzylinder ordnungsgemäß arbeitet. So ist der Anschlag vorzugsweise formschlüssig an dem Kolben befestigt.

Um eine sehr enge Toleranz einhalten zu können, ist der Vorsprung vorzugsweise zylindrisch und weist zumindest im Bereich des freien Endes eine Stufe zur Anlage einer Scheibe auf.

In vorteilhafter Weiterbildung der Erfindung ist der Anschlag durch die mit dem Vorsprung vernietete ringförmige Scheibe gebildet. Dabei legt die Stufe die Lage der Scheibe fest. Die ringförmige Scheibe kann auf die Stufe aufgesetzt werden, wobei ein Ansatz des Vorsprunges durch eine Öffnung der ringförmigen Scheibe ragt, welcher durch eine geeignete Umformtechnik, vorzugsweise durch Taumelnieten, verformt werden kann und somit die Scheibe mit dem Vorsprung unlösbar verbindet. Es ist im Rahmen der Erfindung aber auch möglich, die Scheibe durch Schweißen oder durch Nieten mit dem Vorsprung unlösbar zu verbinden.

Der Anschlag kann vorzugsweise dadurch gebildet werden, dass man den Endbereich des Vorsprungs durch Stauchen verbreitert. Dadurch wird eine Reduzierung der Bauteile der Kolbenzylindereinheit erreicht.

Eine Vereinfachung der Montage des Kolbens in den Zylinder wird erreicht, indem der Kolben durch ein Fließpressverfahren geformt ist und auf einer Außenseite mit Ausnehmungen versehen ist, die zu einer Aufnahme einer den Kolben bewegenden Druckstange dienen.

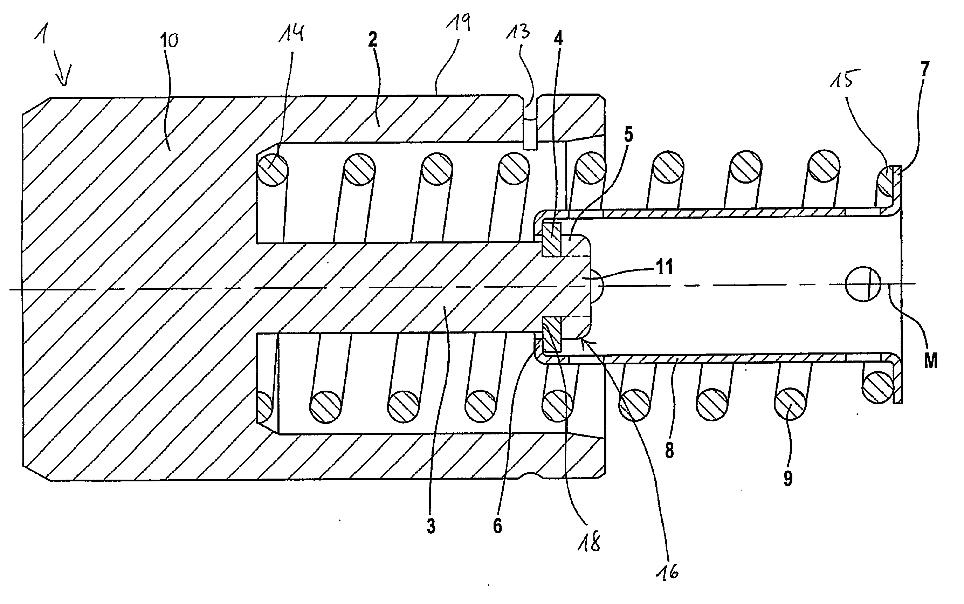

Ein Ausführungsbeispiel der Erfindung wird nachfolgend anhand der Zeichnung erläutert.

In der Zeichnung ist ein Kolben 1 im Schnitt gezeigt. Der Kolben 1 weist einen Boden 10 und einen davon vorstehenden Topf 2 auf. Längs einer Mittelachse M des Kolbens 1 erstreckt sich in dem Topf 2 ein zylindrischer Vorsprung 3. Der Vorsprung 3 und der Topf 2 werden durch Fließpressen aus dem Werkstoff des Kolbens 1 geformt.

An einem freien Ende 16 des Vorsprunges 3 ist eine Stufe 18 angeformt, die als Anlage für einen als ringförmige Scheibe ausgestalteten Anschlag 4 dient. Ein durch Strichlinien angedeuteter Ansatz 11 des Vorsprunges 3 ragt durch eine Öffnung der ringförmigen Scheibe 4 hindurch und kann beispielsweise durch Taumelnieten zu einem Nietkopf 5 umgeformt werden, womit die Scheibe 4 mit dem Vorsprung 3 unlösbar verbunden ist.

Der Ansatz 11 und die Stufe 18 können durch Abdrehen des Vorsprunges 3 hergestellt werden. Durch die Stufe 18 lässt sich die Lage der Scheibe 4 sehr genau bestimmen und enge Toleranzen einhalten.

An einer dem Kolben 1 zugewandten Seite der Scheibe 4 greift ein radial nach innen gerichteter Flansch 6 einer Haltevorrichtung 8 an, die als Hülse ausgestaltet ist. Die Hülse 8 besitzt an einem freien Ende einen umlaufenden, radial nach außen gerichteten Flansch 7. Eine Feder 9 stützt sich mit einem ersten Ende 14 an dem Boden 10 des Kolbens 1 und mit einem zweiten Ende 15 an dem Flansch 7 der Hülse 8 ab und ist somit vorgespannt. Die maximale Ausdehnung der Feder 9 in Längsrichtung ist durch die Hülse 8 festgelegt. Die Scheibe 4 begrenzt die Bewegung der Hülse 8 gegenüber dem Kolben 1.

Es ist möglich, die Lage der Scheibe 4 durch Stauchen des freien Endes 16 des Vorsprunges 3 festzulegen. Schließlich kann unter Umständen auf die Verwendung der Scheibe 4 überhaupt verzichtet werden, indem durch Stauchen des freien Endes 16 ein Anschlag 4 für die Hülse 8 gebildet wird, wobei der Vorsprung 3 so lange gestaucht wird, bis der Anschlag 4 sich in der richtigen Lage befindet.

An einer Außenseite 19 des Kolbens 1 sind Ausnehmungen 13 vorgesehen, welche zu einer Aufnahme einer den Kolben 1 bewegenden Druckstange dienen.

## Patentansprüche

1. Kolbeneinheit mit einer gefesselten Feder (9) für einen Zylinder, insbesondere für einen Tandem-Hauptzylinder eines Kraftfahrzeuges, bei der die Feder (9) sich mit einem ersten Ende (14) zumindest mittelbar an einem Kolben (1) und mit einem zweiten Ende (15) an einer gegenüber dem Kolben (1) verschiebbaren Haltevorrichtung (8) abstützt, deren Bewegung gegenüber dem Kolben (1) durch Sicherungsmittel (3,4) begrenzt ist, wobei die Sicherungsmittel (3,4) einen unlösbar an dem Kolben (1) angeordneten Vorsprung (3) aufweisen, an dessen freiem Ende (16) ein Anschlag (4) vorgesehen ist, welcher die Bewegung der Haltevorrichtung (8) gegenüber dem Kolben (1) begrenzt, und die maximale Ausdehnung der Feder in ihrer Längsrichtung festlegt **dadurch gekennzeichnet, dass** der Kolben (1) einen Boden (10) und einen davon vorstehenden Topf (2) aufweist, welcher die Feder (9) und den Vorsprung (3) zumindest teilweise aufnimmt.

2. Kolbeneinheit nach Anspruch 1, **dadurch gekennzeichnet, dass** der Vorsprung (3) einstückig vorzugsweise durch Fließpressen an den Kolben (1) angeformt ist.

3. Kolbeneinheit nach Anspruch 1 oder 2, **dadurch gekennzeichnet, dass** der Anschlag (4) formschlüssig an dem Kolben (1) befestigt ist.

4. Kolbeneinheit nach Anspruch 3, **dadurch gekennzeichnet, dass** der Vorsprung (3) zylindrisch ist und zumindest im Bereich des freien Endes (16) eine Stufe (18) zur Anlage einer Scheibe (4) aufweist.

5. Kolbeneinheit nach Anspruch 4, **dadurch gekennzeichnet, dass** der Anschlag (4) durch die mit dem Vorsprung (3) vernietete ringförmige Scheibe gebildet ist.

6. Kolbeneinheit nach Anspruch 5, **dadurch gekennzeichnet, dass** der Anschlag (4) durch Taumelnieten an dem Kolben (1) befestigt ist.

7. Kolbeneinheit nach Anspruch 1 oder 2, **dadurch gekennzeichnet, dass** der Anschlag (4) durch Umformen des freien Endes (16) des Vorsprunges (3) gebildet ist.

8. Kolbeneinheit nach einem der Ansprüche 1 bis 7, **dadurch gekennzeichnet, dass** der Kolben (1) durch ein Fließpressverfahren geformt ist und auf einer Außenseite (19) mit Ausnehmungen versehen ist, die zu einer Aufnahme einer den Kolben (1) bewegenden Druckstange dienen.

## Claims

1. Piston unit having a captive spring (9) for a cylinder, in particular a tandem master cylinder of a motor vehicle, wherein the spring (9), with a first end (14), is supported at least indirectly on a piston (1) and, with a second end (15), is supported on a retaining device (8) that is displaceable relative to the piston (1), the movement of which spring relative to the piston (1) is limited by securing means (3, 4), the securing means (3, 4) including a projection (3) that is non-detachably arranged at the piston (1) and whose free end (16) is provided with a stop (4) that limits the movement of the retaining device (8) relative to the piston (1) and defines the maximum extension of the spring in its longitudinal direction,
**characterized in that** the piston (1) includes a bottom (10) and a bowl (2) projecting from it, said bowl accommodating the spring (9) and the projection (3) at least in part.

2. Piston unit as claimed in claim 1,
**characterized in that** the projection (3) is formed integrally with the piston (1), preferably by extrusion.

3. Piston unit as claimed in claim 1 or 2,
**characterized in that** the stop (4) is fastened to the piston (1) in a form-fit.

4. Piston unit as claimed in claim 3,
**characterized in that** the projection (3) is cylindrical and includes a step (18) for abutment of a disc (4) at least in the area of the free end (16).

5. Piston unit as claimed in claim 4,
**characterized in that** the annular disc riveted to the projection (3) forms the stop (4).

6. Piston unit as claimed in claim 5,
**characterized in that** the stop (4) is fastened to the piston (1) by way of wobble-riveting.

7. Piston unit as claimed in claim 1 or 2,
**characterized in that** the stop (4) is provided by deforming the free end (16) of the projection (3).

8. Piston unit as claimed in any one of claims 1 to 7,
**characterized in that** the piston (1) is formed in an extrusion process and, on an outside surface (19), includes recesses (13) used to accommodate a push rod that moves the piston (1).

## Revendications

1. Unité de piston avec un ressort bloqué (9) pour un cylindre, en particulier pour un maître-cylindre tandem d'un véhicule automobile, dans lequel le ressort (9) s'appuie avec une première extrémité (14) au moins indirectement contre un piston (1) et avec une seconde extrémité (15) contre un dispositif de retenue (8) pouvant coulisser par rapport au piston (1), dont le mouvement par rapport au piston (1) est limité par des moyens de fixation (3, 4), moyennant quoi les moyens de fixation (3, 4) comprennent une saillie (3) disposée de façon non détachable sur le piston (1), à l'extrémité (16) libre de laquelle est prévue une butée (4) qui limite le mouvement du dispositif de retenue (8) par rapport au piston (1), et détermine l'extension maximale du ressort dans son sens longitudinal, **caractérisée en ce que** le piston (1) comprend un fond (10) et un godet (2) situé en amont de celui-ci, qui reçoit au moins partiellement le ressort (9) et la saillie (3).

2. Unité de piston selon la revendication 1, **caractérisée en ce que** la saillie (3) est façonnée d'un seul tenant avec le piston (1) de préférence par formage par fluage.

3. Unité de piston selon la revendication 1 ou 2, **caractérisée en ce que** la butée (4) est fixée sur le piston (1) par complémentarité de forme.

4. Unité de piston selon la revendication 3, **caractérisée en ce que** la saillie (3) est cylindrique et comprend au moins dans la zone de l'extrémité libre (16) un étage (18) servant de support d'un disque (4).

5. Unité de piston selon la revendication 4, **caractérisée en ce que** la butée (4) est formée par le disque annulaire riveté avec la saillie (3).

6. Unité de piston selon la revendication 5, **caractérisée en ce que** la butée (4) est fixée sur le piston (1) par rivetage par fluage radial.

7. Unité de piston selon la revendication 1 ou 2, **caractérisée en ce que** la butée (4) est formée par le façonnage de l'extrémité libre (16) de la saillie (3).

8. Unité de piston selon une des revendications 1 à 7, **caractérisée en ce que** le piston (1) est façonné par un procédé de formage par fluage, et il est équipé sur une face externe (19) d'évidements qui permettent de recevoir une tige de compression déplaçant le piston (1).
